(19) Europäisches Patentamt
European Patent Office
Office européen des brevets

(11) **EP 4 783 469 A1**

(12) **EUROPEAN PATENT APPLICATION**

(43) Date of publication:
**29.07.2026 Bulletin 2026/31**

(21) Application number: **25153330.3**

(22) Date of filing: **22.01.2025**

(51) International Patent Classification (IPC):
*H04B 1/04* (2006.01)          *H04B 1/10* (2006.01)
*H04B 1/40* (2015.01)          *H04B 5/00* (2024.01)

(52) Cooperative Patent Classification (CPC):
**H04B 1/10; H04B 1/0483; H04B 1/40; H04B 5/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Stahl, Johannes**
**5656 AG Eindhoven (NL)**

• **Musil, Markus**
**5656 AG Eindhoven (NL)**
• **Wobak, Markus**
**5656 AG Eindhoven (NL)**

(74) Representative: **Krott, Michel**
**NXP B.V.**
**Intellectual Property & Licensing**
**High Tech Campus 60**
**5656 AG Eindhoven (NL)**

Remarks:
Claims filed after the date of filing of the application
(Rule 68(4) EPC).

(54) **METHOD AND DEVICE FOR CLASSIFYING AN RF LINK**

(57) In some implementations, the method may include receiving an RF signal of the RF link (1, 2) by an antenna interface (12) of a primary radio device (10). In addition, the method may include performing spectral analysis with the received RF signal, where harmonics of the received signal are searched. The method may include in a case, that harmonics are detected: determining a fundamental frequency of the RF signal from a spacing of the determined harmonics. Also, the method may include classifying the RF link (1, 2) based on the determined fundamental frequency.

Fig. 6

EP 4 783 469 A1

**Description**

TECHNICAL FIELD

The present disclosure relates to a method for classifying an RF link. Furthermore, the present disclosure relates to a device for classifying an RF link.

BACKGROUND

A growing number of applications and technologies use contactless interaction via Radio Frequency (RF) media and an increasing integration density enables a strong increase of mobile devices (e.g. mobile phones, wearables, smart glasses, etc.) being used for contactless usage scenarios. Hence, an end user may position a mobile device being exposed to one or several RF-links at the same point in time. Those RF-links may include internally standardized and broadly deployed technologies like e.g. Near Field Communication (NFC), Radio Frequency Identification (RFID), wireless charging such as Qi, AirFuel which partially may share the same RF frequency band of operation or not. In telecommunications and wireless systems frequency bands are allocated to avoid interference and ensure efficient use of frequency spectra. A carrier signal that operates outside a designated or intended frequency band for a main communication or main transmission may have adverse effects.

It is an object of the present disclosure to provide an improved method for classifying an RF link.

SUMMARY

In one general aspect, the method may include receiving an RF signal of the RF link by an antenna interface of a primary radio device. The method may also include performing spectral analysis on the received RF signal, where harmonics of the received signal are searched; where in a case, that harmonics are detected, the method may furthermore include determining a fundamental frequency of the RF signal of the RF link from a spacing of the determined harmonics. The method may in addition include classifying the RF link based on the determined fundamental frequency.

Other embodiments of this aspect include corresponding computer systems, apparatus, and computer programs recorded on one or more computer storage devices, each configured to perform the actions of the method.

In this way, a classification of an RF link can be performed between in-band and out-of-band (OOB), wherein a carrier of an OOB RF link is detected via harmonics and not directly. In other words, a frequency of the OOB carrier is detected indirectly. Numerous useful use cases can be covered in this way, e.g. with respect to a primary RF link that represents NFC, to distinguish whether an NFC device or a non-NFC device is coupled via the RF-link. Harmonic content outside of a passband of a filter can be determined, wherein based on a spacing of the harmonics, a retroactive calculation is carried out to determine the carrier frequency.

In one general aspect, a detector device may include one or more processors configured to receive an RF signal of the RF link by an antenna interface of a primary radio device, perform spectral analysis on the received RF signal, wherein harmonics of the received signal are searched, wherein in a case, that harmonics are detected, the device may also include determining a fundamental frequency of the RF signal of the RF link from a spacing of the determined harmonics. Furthermore, the device may classify the RF link based on the determined fundamental frequency.

Other embodiments of this aspect include corresponding computer systems, apparatus, and computer programs recorded on one or more computer storage devices, each configured to perform the actions of the methods.

In one or more embodiments, in a case, that no harmonics are detected, the received RF signal of the RF link is classified as an in-band signal. This represents a counter-example where the method does not detect an OOB signal but an in-band signal, which is then appropriately handled by the primary radio device.

In one or more embodiments, a carrier frequency of the RF signal is determined. This allows useful conclusions that can be drawn about neighboring RF devices that operate in the same or different frequency bands as the primary radio device.

In one or more embodiments, the method comprises

I/Q demodulating the received RF signal;
converting the demodulated RF signal from analog to digital domain;
evaluating of an equivalent baseband time domain signal squared magnitude in the digital domain;
filtering the equivalent baseband time domain signals squared magnitude to evaluate frequency content of interest;
comparing the filter output to a specified threshold; and
notifying a presence of an out-of-band carrier with respect to the primary radio device if the specified threshold is exceeded.

Thus, a signal processing is done, which processes a distance between harmonics and can therefore provide information about the carrier frequency of a secondary RF device.

In one or more embodiments, the received RF signal is shaped using a transfer function H(f) with a specified passband concerning a working frequency of the primary radio device, wherein the fundamental frequency of the received RF signal is outside the passband of the transfer function H(f).

The transfer function is a feature of an RF receiver in the use case NFC anyway, which is used to filter a received signal. In this way a band of interest is defined to make a passband of a primary carrier frequency to make the signal sensitive for the primary use case.

In one or more embodiments, the passband of the transfer function H(f) is at least twice as large as a minimal determined spacing of the harmonics. This provides a useful evaluation of a relationship between frequencies that may or may not be classified as harmonics.

In one or more embodiments, the equivalent baseband time domain signal's squared magnitude is filtered around a specified target frequency, the specified target frequency being lower than a carrier frequency of the primary radio device. For example, 280 kHz is an illustrative target frequency for the use case "Wireless-charging detection".

In one or more embodiments, in the case that an OOB carrier is detected, at least one of the following actions are performed: adapting the characteristics of the primary radio device, performing a protection measure for the primary radio device. Hence, different courses of action can be implemented that specifically deal with detected and classified RF links.

In one or more embodiments, the RF link is classified in relation to the primary radio device being an NFC device.

BRIEF DESCRIPTION OF DRAWINGS

The above discussion/summary is not intended to describe each implementation of the present disclosure. The drawings and detailed description that follow also exemplify various embodiments. The aspects defined above and further aspects of the present disclosure are apparent from the examples to be described hereinafter with reference to the appended drawings, which are explained with reference to the examples. The disclosure is not limited to the described examples.

All illustrations in the drawings are schematical. It is noted that in different figures, similar or identical elements or features are provided with the same reference signs or with reference signs that are different from the corresponding reference signs only within the first digit. In order to avoid unnecessary repetitions, elements or features which have already been elucidated with respect to a previously described implementation are not elucidated again at a later position of the description.

Various example embodiments may be understood in consideration of the following detailed description in connection with the accompanying drawings, in which:

FIG. 1    shows a block diagram of a wireless communication system with two RF links;

FIG. 2    shows an illustration of relevant coupling scenarios for a low-frequency OOB interference;

FIG. 3    shows frequency representations of a square wave signal in different states of processing;

FIG. 4    shows frequency domain representations of harmonics of a 140 kHz square wave wireless charging signal received by an NFC device in (a) RF-domain, (b) baseband domain, (c) squared equivalent baseband magnitude domain;

FIG. 5    shows frequency domain representations of a 13.84 MHz RF carrier signal received by an NFC device in (a) RF-domain, (b) baseband domain, (c) squared equivalent baseband magnitude domain;

FIG. 6    shows a block diagram with an exemplary implementation of a proposed low-frequency OOB signal detector in the digital domain; and

FIG. 7    shows an exemplary flow diagram of the proposed method.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

DESCRIPTION OF EMBODIMENTS

An out-of-band (OOB) carrier refers to a communication signal or frequency that operates outside the main band of frequencies designated for primary communication or data transmission. This concept is common in telecommunications, radio, and other communication systems, and it typically serves specific purposes related to control, management, or auxiliary functions.

The present disclosure proposes a method that enables a primary radio device to detect harmonics of low-frequency OOB signals and to initiate associated actions, such as reconfiguration of the primary radio device. Further, a description of an efficient implementation of a method to extract the fundamental frequency of OOB signals from the baseband by analysis of the harmonic pattern sensed in the primary passband is provided. This may, e.g., result in increased robustness against OOB harmonic interference of NFC RF collision avoidance mechanism.

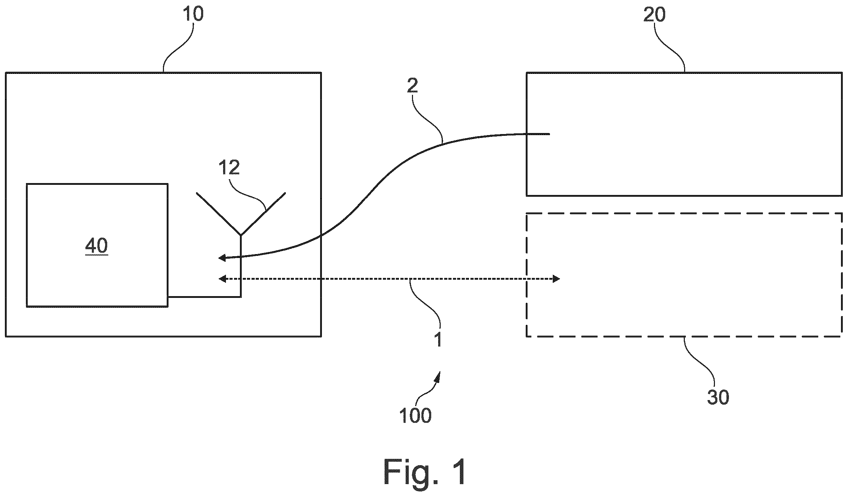

In the following, a coexistence of two RF links is considered. FIG. 1 shows a radio system (wireless communication system) 100 with a first RF link 1 (primary RF link, in-band RF link), representing a target application (e.g. NFC) with a frequency band of interest around an inband carrier frequency $f_{C,IB}$. Via the first RF link 1, a primary radio device 10 (e.g. RF communication device, smartphone, tablet, etc.) communicates with a primary radio counterpart device 30. Furthermore, the radio system 100 comprises a second RF link 2 (OOB RF link) having a frequency band of interest around a center frequency $f_{C,OOB} \ll f_{C,IB}$. The second RF link 2 may be operated by a wireless charging signal, e.g. a Qi signal. Qi is a wireless charging standard that enables power transfer between a charging pad and compatible devices without needing physical connectors. Using the Qi signal, electromagnetic energy is transferred via inductive coils, wherein a charging pad generates an oscillating magnetic field, which induces an electric current in a receiver coil within the device placed on the pad.

The coexistence of the second RF link 2 with the first RF link 1 is handled in the context of the exemplary illustrated target application (e.g. wireless charging in the context of NFC). The present disclosure proposes a method to classify a relevance of the detected second RF link 2 with a lower frequency OOB radio device by a detector device 40 using an antenna interface 12 of the primary radio device 10. An example of the first RF link 1 is NFC with a carrier frequency $f_{C,IB}$ = 13.56 MHz (and corresponding industrial, scientific and medical (ISM) band). An example of an OOB radio device is a wireless charger device with OOB carrier frequency $f_{C,OOB}$ typically in the range of a few 100 kHz.

In the following, examples are given on end-user problems that can be overcome by the present disclosure. The mentioned problems may be grouped into two classes (i), (ii) wherein also combinations are possible/expected:

(i) OOB RF signal via the second RF link 2 is a "not desired signal" in the way that it can be misinterpreted as another signal that, when sensed with the primary radio, shall trigger certain actions that should not be caused by the OOB signal

Example 1: NFC devices perform RF collision avoidance (as defined in NFC forum specification or ISO/IEC 18092) to check for the presence of any other NFC RF field before enabling the RF carrier in reader mode. In case a presence of an external NFC 13.56 MHz RF field is detected, the primary radio device 10 is expected not to enable its NFC 13.56 MHz RF carrier. Harmonics of wireless-charging signals can trigger the RF collision avoidance mechanism, possibly preventing NFC communication. By correctly detecting the wireless-charging signals as OOB signals, they can be differentiated from active NFC RF field and this behavior can be prevented.

(ii) OOB signal via the second RF link 2 is a "desired signal" in the way that its presence shall be sensed by the primary radio to initiate specific actions

Example 2: A mobile NFC device is presented to a Qi wireless charger emitting high power. The mobile NFC device antenna picks up strong RF energy, which can over time harm the device (e.g., due to heating or excessively high induced voltages). By explicitly detecting the Qi field with the mobile device, protection actions (disconnect antenna or similar) can be performed.

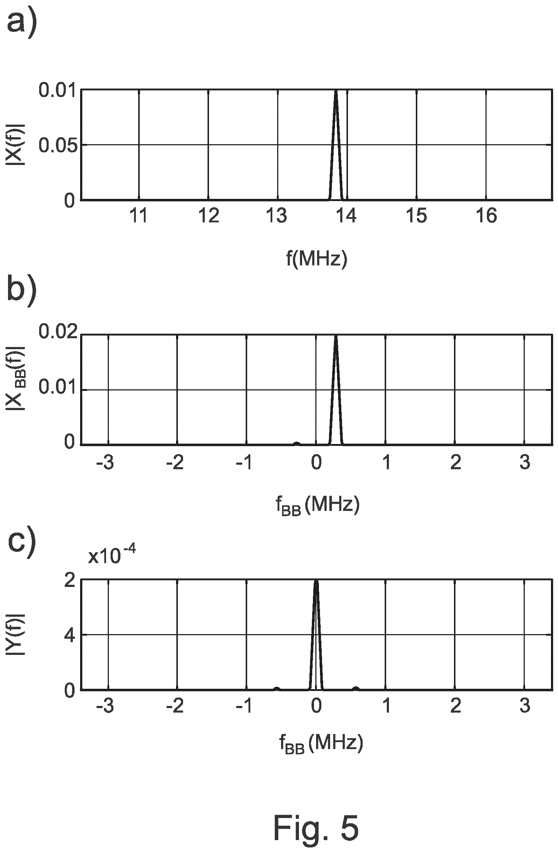

Example 3: A mobile NFC device is presented to a Qi wireless charger. By detecting the presence of the Qi charger, the NFC device can enter a special mode (e.g., optimized configuration) for communication with a counterpart device, including the Qi wireless charger. Examples 2 and 3 in the context of the above-mentioned class (ii) are illustrated in more detail below in the context of FIG. 5.

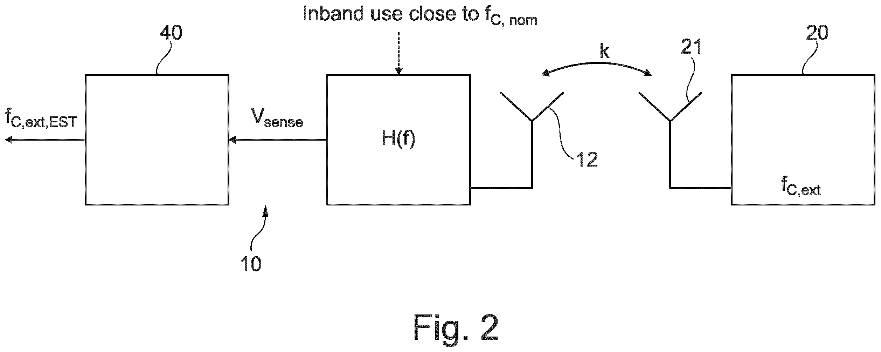

FIG. 2 illustrates an OOB harmonic signal detection scenario on a high-level. A signal $V_{sense}$ is applied to a detector device 40 (OOB carrier detector). The signal $V_{sense}$ originates from a received RF signal, having been received by the antenna interface 12 which has been transmitted by an external secondary radio device 20 via its antenna device 21. The signal is scaled/shaped by a transfer function H(f), which is predetermined by a primary use case (inband use). For example, a transfer function H(f) is an NFC transfer function which is formed by an RLC resonant tank with a resonance frequency close to a nominal carrier frequency $f_{C,nom}$ = 13.56 MHz of the primary radio and an exemplary quality factor of approximately 4 to approximately 25.

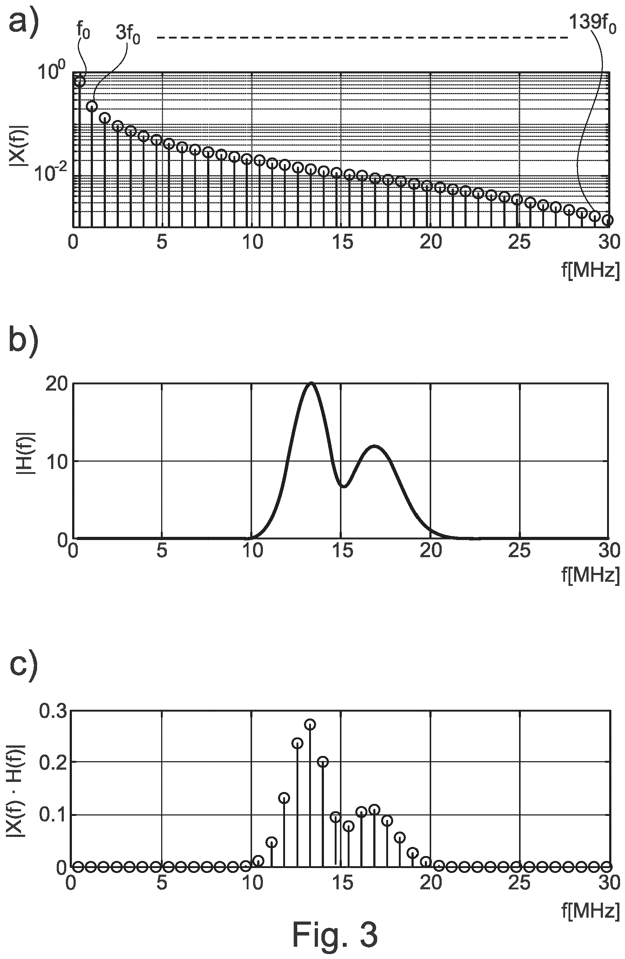

The transfer function H(f) is an integral part of an NFC device H(f) and is used to enable a wireless communication between NFC devices and is foreseen to provide an electromagnetic coupling between two NFC devices. An effect of said transfer function H(f) to the received signal is shown in FIG. 3b. FIG. 3a shows a spectral main component $f_0$ (fundamental frequency) and harmonic components **h** = 1 ... **h** = 141 of said square wave signal, wherein the harmonic components $3f_0$ and $139f_0$ are labeled. It can be seen that spectral components **h** = 1 ... **h** = 141 of an OOB carrier radio emitter signal as shown in FIG. 3a will be mostly filtered out by the transfer function H(f) and will not affect the main band of operation of the primary radio device 10.

A typical real-world RF signal not only contains a fundamental component but is composed of multiple frequency (e.g. harmonic) components (typically analyzed via Fourier series expansion or similar methods) , e.g., in the case of a square wave signal, with which a Qi signal may be implemented. Hence, only the harmonic content in the primary pass-band range will be visible for the detector device 40, as indicated in FIG. 3c. In order to estimate the OOB carrier frequency $f_{C,OOB}$, it is proposed to determine a spacing between harmonics in the received signal. In case of harmonic signals, the frequency spacing between the harmonic components **h** is an integer multiple of the fundamental frequency $f_0$. The spacing between the harmonic components is used to determine the carrier frequency of the OOB carrier of the second RF link 2. It can be seen, that in FIG. 3a the fundamental frequency $f_0$ is outside the passband of the transfer function H(f). FIG. 3c represents the signal $V_{sense}$ having been filtered by the transfer function H(f), which is applied to the detector device 40.

To illustrate the feasibility and reasoning behind the OOB harmonic signal detection, the method is shown in discrete-time (baseband), assuming a direct-conversion I/Q demodulator operating at a local oscillator frequency $f_s$ resulting in signals $x_I[n]$ & $x_Q[n]$ as function of discrete-time index n. The equivalent complex-valued baseband representation (complex envelope) of the harmonic signal then is given by

$$x[n] = x_I[n] - jx_Q[n] = \sum_{h=h_{\min}}^{h_{\max}} A_h \exp\left(j\left(2\pi \frac{hf_0}{f_s n} + \phi_h\right)\right) \qquad (1)$$

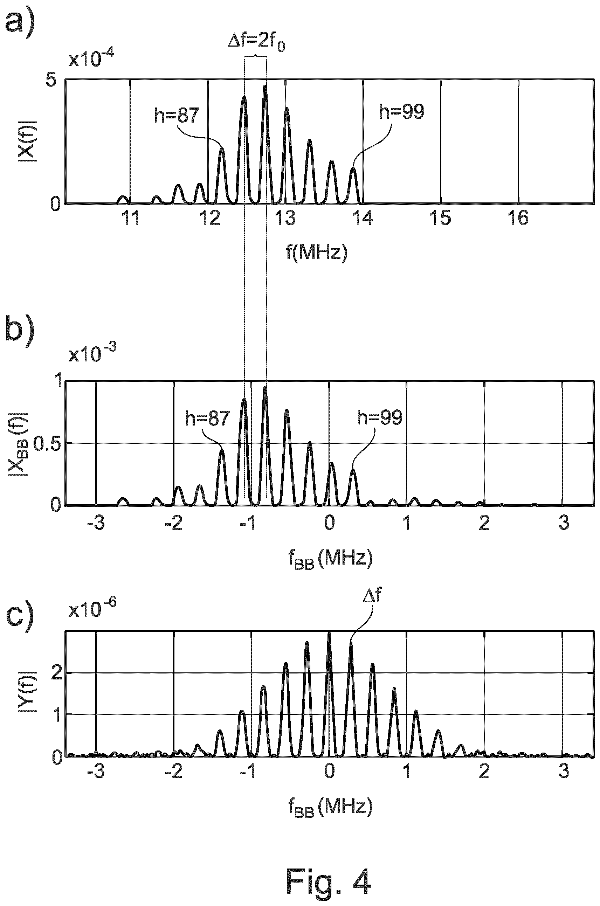

where h is the harmonic index, $h_{\min}$ and $h_{\max}$ indicate the minimum and maximum harmonic index that passes the transfer function H(f) with significant signal energy. $A_h$ is the harmonic amplitude, $\phi_h$ the harmonic phase, and $f_0$ is the fundamental frequency of the harmonic signal. The mapping from passband to baseband representation is depicted in FIGs. 4a) to 4b). The depicted signals correspond to a measurement where a Qi-charging signal having approximately a square wave with fundamental frequency 140 kHz is sensed at the RX pin of the primary radio device 10 being implemented as an NFC receiver.

To efficiently detect harmonic patterns of interest, it is proposed to preprocess the signal before applying spectral analysis to evaluate the harmonic patterns in the signal. The proposed pre-processing step consists of evaluating the complex envelope's squared magnitude $y[n] = |x[n]|^2$:

$$y[n] = |x[n]|^2 = x^*[n]x[n]$$
$$= \left(\sum_{h=1}^{H} A_h \exp\left(-j\left(2\pi \frac{hf_0}{f_s}n + \phi_h\right)\right)\right)\left(\sum_{h=1}^{H} A_h \exp\left(j\left(2\pi \frac{hf_0}{f_s}n + \phi_h\right)\right)\right)$$

$$y[n] = 2\sum_{h=h_{\min}}^{h_{\max}} \sum_{m=h_{\min}}^{h-1} A_h A_m \exp\left(j\left(2\pi \frac{f_0(h-m)}{f_s}n + \phi_h\right)\right) \quad (2)$$

As can be seen from the above equation (2), $y[n]$ has significant spectral content only at delta frequencies between harmonics. These delta frequencies correspond to integer multiples of the fundamental frequency $f_0$, ($f_0 (h - m)$), or in other words the "spacing" between the individual spectral components **h**.

To illustrate the described signal transformation and its practical implications FIG. 4 depicts frequency domain representations of the individual processing stages. Therein, an OOB square-wave signal with fundamental frequency $f_0$ = $f_{C,OOB}$ = 140 kHz is assumed, being representative of a Qi-charging signal. The primary RF radio is an NFC device and due to the filtering with the transfer function H(f) (as shown in FIG. 3) only odd-order harmonics h = 87 to h = 99 are significantly strong in the received signal at the primary receiver around 13.56 MHz. This results in a passband frequency-domain representation as shown in FIG. 4 a), which represents the signal before downmixing. Via downmixing, the passband signal is shifted into the baseband, wherein the general structure of the signal in FIG. 4b is the same as in FIG. 4a. The shown signal may e.g. trigger an RF collision avoidance.

Due to the transfer function H(f), rejecting OOB signals, the equivalent complex-valued baseband representation achieved by direct-conversion down-mixing with 13.56 MHz results in a shifted frequency domain representation, with spectral content around 0Hz baseband, as depicted in FIG. 4b. Hence, the harmonic patterns seen in the passband signal are preserved, with a harmonic spacing of $2f_0$. Evaluating the equivalent baseband signal's squared magnitude ($y[n]$) at $2f_0$ = 280 kHz hence will indicate a presence of the 140 kHz square-wave Qi-charging signal, as shown in FIG. 4c). FIG. 4c shows the frequency bin at $\Delta f$, wherein $\Delta f$ corresponds to $2f_0$ as shown in FIG. 4a. As a consequence, an initial RF collision avoidance trigger event can be rejected since the interference can be assumed to come from a Qi-charging device rather than a single RF carrier emitted by a concurring NFC reader that is not the originator of the second RF link 2.

FIG. 4c shows the frequency representation being generated by a second converter element 44, which is the squared magnitude of the equivalent base band signal. A spacing of the tips in FIGs. 4a, 4b corresponds to a signal level indicated with $\Delta f$ in FIG. 4c. Harmonic content in the spectrum of $y$ is thus searched at $\Delta f$, wherein $\Delta f$ represents a mapping to the corresponding frequency bin. Hence, the $\Delta f$ is evaluated to see if significant harmonic content is present. To this end, a level of the frequency bin at $\Delta f$ is evaluated using a threshold detector 46, which compares the level at $\Delta f$ to a specified threshold.

FIG. 5 depicts a counterexample as mentioned above in the context of a class (ii) "desired signal" with examples 2, 3 with an OOB carrier link being implemented as a single RF carrier signal in primary passband with 13.84 MHz. It can be seen that this case results in signal energy mainly at the DC component of y[n], as shown in FIG. 5c. Hence, in such a scenario, e.g. an initial RF collision avoidance trigger event can be confirmed by a proposed processing. An example of such a procession could be e.g. a specific setting of the primary radio device 10, ON/OFF setting of the primary radio device 10, alarm settings, etc. In other words, FIG. 5 shows a detected in-band signal, which lies within the passband of the transfer function H(f) (not shown in FIG. 5). In the context of FIG. 5, e.g. a collision avoidance mechanism can be applied, that prevents the primary radio device 10 from also transmitting NFC signals as the counterpart device 30 already emits an NFC signal.

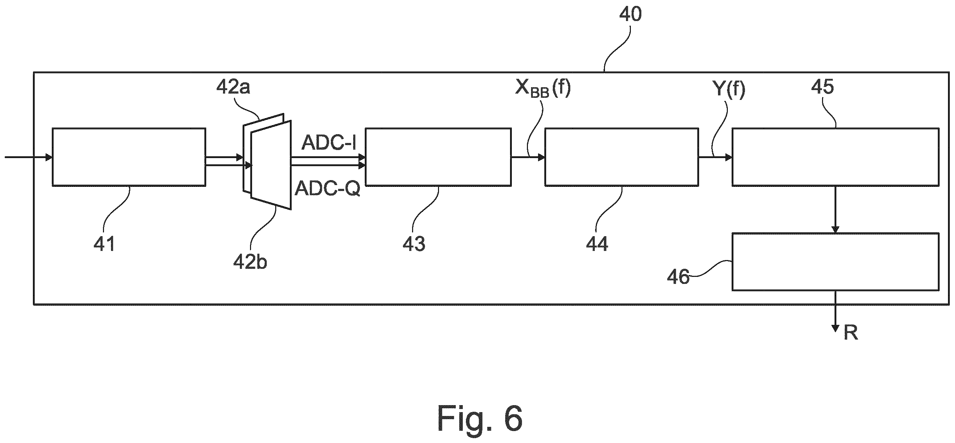

FIG. 6 shows a detailed block diagram of an exemplary detector device 40. It can be seen, that the detector device 40 comprises an analog front-end 41, to which the signal $V_{sense}$ is applied. By means of gain stages and I/Q demodulation elements 42a, 42b, the signal is converted into digital domain. Afterwards, the equivalent baseband signal is created by means of a first converter element 43 as shown in FIG. 4b. A squaring operation is performed by the second converter element 44 (squaring), its magnitude is followed by a filtering operation performed by a filter 45 to evaluate the frequency content of interest, e.g. around 280 kHz in case of Qi-charging signals. A final detection result R can be achieved by comparing the filter's output to a threshold by means of a threshold detector 46. As an alternative, an analog envelope detector followed by a filtering and thresholding like in the digital domain can be implemented.

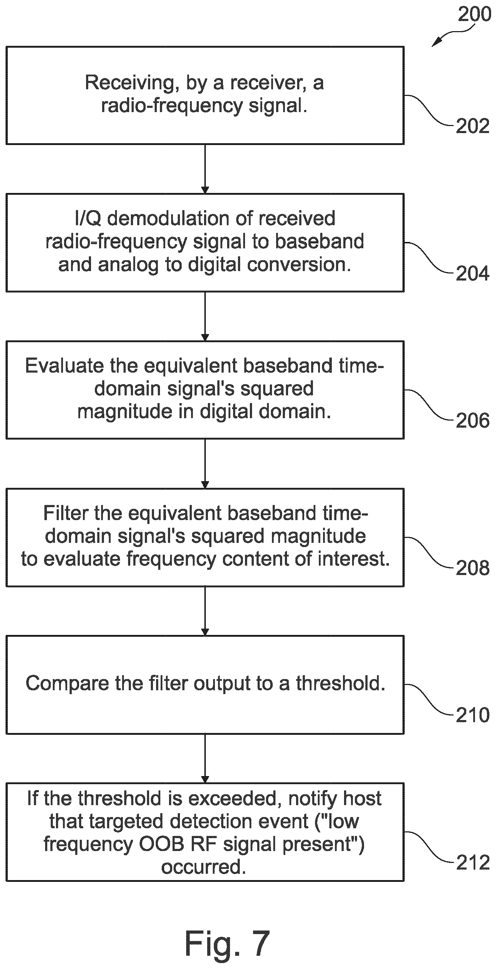

FIG. 7 is a flowchart of an example process 200. In some implementations, one or more process blocks of FIG. 7 may be performed by a detector device 40.

As shown in FIG. 7, process 200 may include receiving by a receiver, an RF signal (block 202). Furthermore, the process may include an I/Q demodulation of the received RF signal to baseband and perform analog to digital conversion (block 204). As also shown in FIG. 7, process 200 may include to evaluate the equivalent baseband time-domain signal squared magnitude in digital domain (block 206). Process 200 may include to filter the equivalent baseband time-domain signals squared magnitude to evaluate frequency content of interest (block 208). The process may include to compare the filter output to a specified threshold (block 210). If the threshold is exceeded, a host (e.g. the primary radio device 10) is notified that a targeted event ("low frequency OOB RF signal present") has occurred.

Although FIG. 7 shows exemplary blocks 202 to 212 of process 200, in some implementations process 200 may also include additional blocks, fewer blocks, different blocks, or differently arranged blocks than those depicted in FIG. 7. Additionally, or alternatively, two or more of the blocks of process 200 may be performed in parallel. In an exemplary implementation, a carrier frequency of the received RF signal is determined.

The method is suitable for a presence detection of a wireless-charger in the proximity of a NFC device to start an application specific reaction and/or to put protection mechanism against the high power wireless charging fields in place.

The present disclosure describes a method for the presence detection of a lower frequency out-of-band (OOB) radio by a primary radio using its primary antenna interface. The method is based on spectral analysis of OOB carrier frequency harmonics instead of direct OOB carrier detection, which is typically not reliably possible via a primary antenna and its associated filtering behavior.

The method makes use of the fact that harmonics of the OOB signal interfere with the in-band signal, which is evaluated in signal processing.

An example of a primary radio link is NFC 13.56 MHz and an example of an OOB radio device is a low frequency wireless charger device. In the context of NFC, a reader-mode device executes RF collision avoidance to prevent enabling its RF carrier when another close-by NFC reader is active at the same time. Under certain conditions, wireless charging devices can trigger state-of-the-art RF collision avoidance mechanisms, preventing NFC communication to be initiated in such scenarios. By correctly detecting that the triggering signal is a low-frequency OOB signal, such misclassifications are avoided, and the device can take corresponding actions.

All mentioned numerical values are only exemplary and can be exchanged with alternative suitable numerical values. Also, the disclosed numerical values are to be understood in a qualitative sense and are represented in a standardized form. In the foregoing description various specific details have been set forth to describe specific examples presented herein. It should be apparent to one skilled in the art, that one or more other examples and/or variations of these examples may be practiced without all the specific details given below. In other instances, well known features have not been described in detail so as not to obscure the description of the examples herein. For ease of illustration, the same reference signs may be used in different diagrams to refer to the same elements or additional instances of the same element. Also, although aspects and features may in some cases be described in individual figures, it will be appreciated that features from one figure or disclosure can be combined with features of another figure or disclosure even though the combination is not explicitly shown or explicitly described as a combination.

As examples, the specification describes and/or illustrates aspects useful for implementing the claimed disclosure by way of various circuits or circuitry which may be illustrated as or using terms such as blocks, modules, device, system, unit, controller, etc. and/or other circuit-type depictions. Such circuits or circuitry are used together with other elements to exemplify how certain embodiments may be carried out in the form or structures, steps, functions, operations, activities, etc. As examples, wherein such circuits or circuitry may correspond to logic circuitry (which may refer to or include a code-programmed/configured CPU, in one example the logic circuitry may carry out a process or method (sometimes "algorithm") by performing such activities and/or steps associated with the above-discussed functionalities. In other examples, the logic circuitry may carry out a process or method by performing these same activities/operations.

For example, in certain of the above-discussed embodiments, one or more modules are discrete logic circuits or programmable logic circuits configured and arranged for implementing these operations/activities. In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described above is used by the programmable circuit to perform the related steps, functions, operations, activities, etc. Depending on the application, the instructions (and/or configuration data) can be configured for implementation in logic circuitry, with the instructions (whether characterized in the form of object code, firmware or software) stored in and accessible from a memory (circuit). As another example, where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize, that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also, elements described in association with different embodiments may be combined.

The disclosed devices, apparatuses, units, elements, systems, and methods described herein may at least partially be embodied by a computer program or a plurality of computer programs, which may exist in a variety of forms, both active and inactive, in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals in compressed or uncompressed form.

It is noted that the embodiments above have been described with reference to different subject-matters. In particular, some embodiments may have been described with reference to method-type claims whereas other embodiments may have been described with reference to apparatus-type claims.

However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

It has to be noted that embodiments have been described with reference to different subject matters. In particular, some embodiments have been described with reference to method type claims whereas other embodiments have been described with reference to apparatus type claims.

However, a person skilled in the art will gather from the above description that, unless other notified, in addition to any combination of features belonging to one type of subject matter also any combination between features relating to different subject matters, in particular between features of the method type claims and features of the apparatus type claims is considered as to be disclosed with this application.

Reference signs:

| | |
|---|---|
| 1 | first RF link |
| 2 | second RF link |
| 10 | primary radio device |
| 12 | first antenna interface |
| 20 | secondary radio device |
| 21 | second antenna interface |
| 30 | primary radio counterpart device |
| 40 | detector device |
| 41 | analog front-end |
| 42a, 42b | gain stages, I/Q-demodulation elements |
| 43 | first converter element |
| 44 | second converter element |
| 45 | filter |
| 46 | threshold detector |
| 100 | radio system |
| 200 | process |
| h | harmonic index identifying spectral components |
| $f_0$ | fundamental frequency |
| k | coupling factor |
| H(f) | transfer function |

**Claims**

1. A method of classifying an RF link (1, 2), comprising

   receiving an RF signal of the RF link (1, 2) by an antenna interface (12) of a primary radio device (10);
   performing spectral analysis on the received RF signal, wherein harmonics of the received signal are searched;
   wherein in a case, that harmonics are detected:

      determining a fundamental frequency of the RF signal of the RF link (1, 2) from a spacing of the detected harmonics; and
      classifying the RF link (1, 2) based on the determined fundamental frequency.

2. The method of claim 1, wherein in a case, that no harmonics are detected, the received RF signal of the RF link (1, 2) is classified as an in-band signal.

3. The method according to claim 1 or 2, wherein a carrier frequency of the RF signal is determined.

4. The method according to any of the preceding claims, comprising I/Q demodulating the received RF signal;

   converting the demodulated RF signal from analog to digital domain; evaluating of an equivalent baseband time domain signal squared magnitude in a digital domain;
   filtering the equivalent baseband time domain signal's squared magnitude to evaluate frequency content of interest;
   comparing a filter output to a specified threshold; and
   notifying a presence of an out-of-band carrier with respect to the primary radio device (10) if the specified threshold is exceeded.

5. The method according to any of the preceding claims, wherein the received RF signal is shaped using a transfer function H(f) with a specified passband concerning a working frequency of the primary radio device (10), wherein the fundamental frequency of the received RF signal is outside the passband of the transfer function H(f).

6. The method according to claim 5, wherein a passband of the transfer function H(f) is at least twice as large as a minimal determined spacing of the harmonics.

7. The method according to claim 5 or 6, wherein the equivalent baseband time domain signal's squared magnitude is filtered around a specified target frequency, the specified target frequency being lower than a carrier frequency of the primary radio device (10).

8. The method according to any of the preceding claims, wherein in the case that an OOB carrier is detected, at least one of the following actions are performed:
adapting characteristics of the primary radio device (10), performing a protection measure for the primary radio device (10).

9. The method according to any of the preceding claims, wherein the RF link (1, 2) is classified in relation to the primary radio device (10) being an NFC device.

10. A detector device (40) configured to perform the method according to any of the preceding claims.

11. A detector device (40) for classifying an RF link (1,2) comprising:
one or more processors configured to:

receive an RF signal of the RF link (1, 2) by an antenna interface (12) of a primary radio device (10);
perform spectral analysis on the received RF signal, wherein harmonics of the received RF signal are searched, wherein in a case, that harmonics are detected:

determine a fundamental frequency of the RF signal of the RF link (1, 2) from a spacing of the determined harmonics; and
classify the RF link (1, 2) based on the determined fundamental frequency.

12. A radio device (10) comprising a detector device (40) according to claim 11.

13. A non-transitory computer-readable medium storing a set of instructions for classifying an RF link (1, 2), the set of instructions comprising:
one or more instructions that, when executed by one or more processors of a device, cause the device to:

receive an RF signal of the RF link (1, 2) by an antenna interface (12) of a primary radio device (10);
perform spectral analysis on the received RF signal, wherein harmonics of the received RF signal are searched wherein in a case, that harmonics are detected:

determine a fundamental frequency of the RF signal of the RF link (1, 2) from a spacing of the determined harmonics; and
classify the RF link (1, 2) based on the determined fundamental frequency.

14. The non-transitory computer-readable medium according to claim 13, further comprising one or more instructions that in a case, that harmonics are detected, initiate at least one of the following actions:

adapt characteristics of the primary radio device (10);
perform a protection measure for the primary radio device (10).

**Amended claims in accordance with Rule 137(2) EPC.**

1. A method of classifying an RF link (1, 2), comprising

receiving an RF signal of the RF link (1, 2) by an antenna interface (12) of a primary radio device (10);
performing spectral analysis on the received RF signal, wherein harmonics of the received signal are searched;
wherein in a case, that harmonics are detected:
determining a fundamental frequency of the RF signal of the RF link (1, 2) from a spacing of the detected harmonics; and

classifying the RF link (1, 2) based on the determined fundamental frequency; the method comprising:

I/Q demodulating the received RF signal;

converting the demodulated RF signal from analog to digital domain;

evaluating of an equivalent baseband time domain signal squared magnitude in a digital domain;

filtering the equivalent baseband time domain signal's squared magnitude to evaluate frequency content of interest;

comparing a filter output to a specified threshold; and

notifying a presence of an out-of-band carrier with respect to the primary radio device (10) if the specified threshold is exceeded.

2. The method of claim 1, wherein in a case, that no harmonics are detected, the received RF signal of the RF link (1, 2) is classified as an in-band signal.

3. The method according to claim 1 or 2, wherein a carrier frequency of the RF signal is determined.

4. The method according to any of the preceding claims, wherein the received RF signal is shaped using a transfer function H(f) with a specified passband concerning a working frequency of the primary radio device (10), wherein the fundamental frequency of the received RF signal is outside the passband of the transfer function H(f).

5. The method according to claim 4, wherein a passband of the transfer function H(f) is at least twice as large as a minimal determined spacing of the harmonics.

6. The method according to claim 4 or 5, wherein the equivalent baseband time domain signal's squared magnitude is filtered around a specified target frequency, the specified target frequency being lower than a carrier frequency of the primary radio device (10).

7. The method according to any of the preceding claims, wherein in the case that an OOB carrier is detected, at least one of the following actions are performed: adapting characteristics of the primary radio device (10), performing a protection measure for the primary radio device (10).

8. The method according to any of the preceding claims, wherein the RF link (1, 2) is classified in relation to the primary radio device (10) being an NFC device.

9. A detector device (40) for classifying an RF link (1,2) comprising:
one or more processors configured to:

receive an RF signal of the RF link (1, 2) by an antenna interface (12) of a primary radio device (10);

perform spectral analysis on the received RF signal, wherein harmonics of the received RF signal are searched, wherein in a case, that harmonics are detected:

determine a fundamental frequency of the RF signal of the RF link (1, 2) from a spacing of the determined harmonics; and classify the RF link (1, 2) based on the determined fundamental frequency; wherein

the one or more processors are configured to:

I/Q demodulate the received RF signal;

convert the demodulated RF signal from analog to digital domain; evaluate an equivalent baseband time domain signal squared magnitude in a digital domain;

filter the equivalent baseband time domain signal's squared magnitude to evaluate frequency content of interest;

compare a filter output to a specified threshold; and

notify a presence of an out-of-band carrier with respect to the primary radio device (10) if the specified threshold is exceeded.

10. A radio device (10) comprising a detector device (40) according to claim 9.

11. A non-transitory computer-readable medium storing a set of instructions for classifying an RF link (1, 2), the set of instructions comprising:

one or more instructions that, when executed by one or more processors of a device, cause the device to:

receive an RF signal of the RF link (1, 2) by an antenna interface (12) of a primary radio device (10);

perform spectral analysis on the received RF signal, wherein harmonics of the received RF signal are searched

wherein in a case, that harmonics are detected:
determine a fundamental frequency of the RF signal of the RF link (1, 2) from a spacing of the determined harmonics; and

classify the RF link (1, 2) based on the determined fundamental frequency; the set of instructions further comprising one or more instructions that, when executed by one or more processors of the device, cause the device to:
I/Q demodulate the received RF signal;
convert the demodulated RF signal from analog to digital domain;

evaluate an equivalent baseband time domain signal squared magnitude in a digital domain;
filter the equivalent baseband time domain signal's squared magnitude to evaluate frequency content of interest;
compare a filter output to a specified threshold; and
notify a presence of an out-of-band carrier with respect to the primary radio device (10) if the specified threshold is exceeded.

12. The non-transitory computer-readable medium according to claim 11, further comprising one or more instructions that in a case, that harmonics are detected, initiate at least one of the following actions:

adapt characteristics of the primary radio device (10);
perform a protection measure for the primary radio device (10).

Fig. 1

Fig. 2

Fig. 3

Fig. 4

Fig. 5

Fig. 6

200

```
┌─────────────────────────────────┐
│                                 │
│      Receiving, by a receiver, a │
│       radio-frequency signal.    │────── 202
│                                 │
└─────────────────────────────────┘
                 │
                 ▼
┌─────────────────────────────────┐
│      I/Q demodulation of received │
│   radio-frequency signal to baseband │
│     and analog to digital conversion. │──── 204
│                                 │
└─────────────────────────────────┘
                 │
                 ▼
┌─────────────────────────────────┐
│  Evaluate the equivalent baseband time- │
│          domain signal's squared │
│       magnitude in digital domain. │──── 206
│                                 │
└─────────────────────────────────┘
                 │
                 ▼
┌─────────────────────────────────┐
│    Filter the equivalent baseband time- │
│    domain signal's squared magnitude │
│  to evaluate frequency content of interest. │── 208
│                                 │
└─────────────────────────────────┘
                 │
                 ▼
┌─────────────────────────────────┐
│                                 │
│  Compare the filter output to a threshold. │── 210
│                                 │
└─────────────────────────────────┘
                 │
                 ▼
┌─────────────────────────────────┐
│  If the threshold is exceeded, notify host │
│   that targeted detection event ("low │
│    frequency OOB RF signal present") │
│              occurred.           │──── 212
└─────────────────────────────────┘
```

Fig. 7

Europäisches
Patentamt

European
Patent Office

Office européen
des brevets

# EUROPEAN SEARCH REPORT

**Application Number**

EP 25 15 3330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 523 261 B2 (APPLE INC [US]) 31 December 2019 (2019-12-31) * abstract; figures 12, 13 * ----- | 1-14 | INV. H04B1/04 H04B1/10 H04B1/40 H04B5/00 |
| X | US 10 771 113 B2 (INTEL CORP [US]) 8 September 2020 (2020-09-08) * abstract; figures 1-8 * * columns 4-6 * ----- | 1-14 | |
| X | US 10 361 735 B2 (SAMSUNG ELECTRONICS CO LTD [KR]) 23 July 2019 (2019-07-23) * abstract; figures 1-5 * * claims 1-8 * ----- | 1-14 | |

**TECHNICAL FIELDS SEARCHED (IPC)**

H04B

The present search report has been drawn up for all claims

| Place of search | Date of completion of the search | Examiner |
|---|---|---|
| Munich | 2 July 2025 | Almenar Muñoz, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 3330

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2025

| Patent document cited in search report | | Publication date | Patent family member(s) | | Publication date |
|---|---|---|---|---|---|
| US 10523261 | B2 | 31-12-2019 | US | 2017288723 A1 | 05-10-2017 |
| | | | WO | 2017172101 A1 | 05-10-2017 |
| US 10771113 | B2 | 08-09-2020 | CN | 108702179 A | 23-10-2018 |
| | | | DE | 112017001712 T5 | 27-12-2018 |
| | | | US | 2017288461 A1 | 05-10-2017 |
| | | | WO | 2017172197 A1 | 05-10-2017 |
| US 10361735 | B2 | 23-07-2019 | CN | 108023603 A | 11-05-2018 |
| | | | EP | 3316492 A1 | 02-05-2018 |
| | | | KR | 20180046673 A | 09-05-2018 |
| | | | US | 2018123627 A1 | 03-05-2018 |

EPO FORM P0459

For more details about this annex : see Official Journal of the European Patent Office, No. 12/82